**Europäisches Patentamt**

**European Patent Office**

**Office européen des brevets**

(19)

(11) Numéro de publication: **0 011 541**
**B1**

(12)

# FASCICULE DE BREVET EUROPEEN

(45) Date de publication de fascicule du brevet: **06.01.82**

(51) Int. Cl.³: **F 16 G 15/06**

(21) Numéro de dépôt: **79400817.7**

(22) Date de dépôt: **02.11.79**

(54) **Manille pour chaîne.**

(30) Priorité: **10.11.78 FR 7832587**

(43) Date de publication de la demande:
**28.05.80 Bulletin 80/11**

(45) Mention de la délivrance du brevet:
**06.01.82 Bulletin 82/1**

(84) Etats contractants désignés:
**DE GB IT SE**

(56) Documents cités:
**US - A - 2 877 621**
**US - A - 3 817 028**

**INTERNATIONALER VERKEHRSBEDARF (AT),
vol. 10, n° 7, juillet 1954, page 118.**

(73) Titulaire: **STAS SOCIETE TECHNIQUE
D'ACCESSOIRES SPECIALISES Société anonyme
dite:**
**77, rue Henri-Brisson**
**F-78500 Sartrouville (FR)**

(72) Inventeur: **Archer, Jean François**
**10, Avenue Georges-Clémenceau**
**F-78670 Villennes (FR)**

(74) Mandataire: **Boivin, Claude**
**9, rue Edouard-Charton**
**F-78000 Versailles (FR)**

Courier Press, Leamington Spa, England.

## Manille pour chaîne

La liaison d'une manille à une chaîne pose un problème difficile à résoudre dans de bonnes conditions. Il est en effet impossible d'engager le corps d'une manille usuelle dans le maillon d'extrémité de la chaîne, à moins d'utiliser une manille de faibles dimensions de résistance nettement inférieure à celle de la chaîne. Si on monte la manille dans l'autre sens en engageant le manillon dans la maille d'extrémité de la chaîne, on peut utiliser une manille dont le manillon a un diamètre sensiblement égal à celui des maillons de la chaîne. Mais un manillon, qui est rectiligne, travaille dans de moins bonnes conditions qu'un maillon de chaîne et, pour que le manillon présente la même résistance qu'un maillon, il faudrait qu'il ait un diamètre supérieur à celui du maillon. Dans les deux cas, la manille constitue un point faible de la chaîne et ne permet pas d'utiliser cette chaîne en la soumettant à la charge pour laquelle elle a été normalement prévue.

La présente invention a pour objet une manille pour chaîne qui peut présenter au contraire, une résistance de même ordre de grandeur que celle de la chaîne sur laquelle elle est montée.

La manille selon l'invention est caractérisée en ce qu'elle présente, à son extrémité opposée au manillon, une fente longitudinale médiane dans laquelle on peut engager transversalement le maillon d'extrémité de la chaîne, et en ce qu'elle comporte une portion de maillon auxiliare pouvant être engagée entre les deux branches de la manille, dans ce maillon d'extrémité.

Pour fixer la manille à la chaîne, il suffit d'engager son maillon d'extrémité dans la fente de la manille, puis d'engager la portion de maillon auxiliaire dans ce maillon d'extrémité. Cette portion de maillon travaille non comme un simple axe rectiligne, mais comme un véritable maillon, de sorte que, si on lui donne un diamètre égal à celui des maillons de la chaîne, la manille présente pratiquement la même résistance que la chaîne.

Pour éviter que la portion de maillon auxiliaire ne se sépare intempestivement de la manille lors de l'utilisation de la chaîne, la manille comporte de préférence des moyens pour fixer cette portion de maillon à la manille. Ces moyens peuvent être, par exemple, constitués par un axe traversant la portion de maillon et les deux branches de la manille.

Dans un mode de réalisation avantageux de l'invention, le corps de la manille est constitué par une plaque munie dans sa partie centrale d'une fente longitudinale et repliée sur elle-même.

On a décrit ci-après, à titre d'exemple non limitatif, un mode de réalisation de la manille selon l'invention, avec référence au dessin annexé dans lequel:

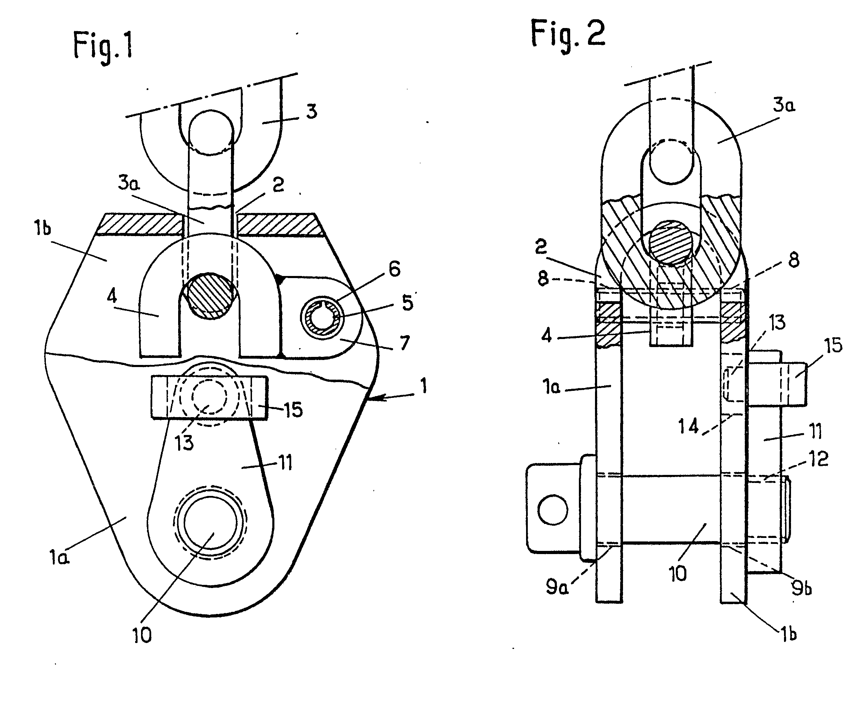

La Figure 1 est une vue en élévation de la manille avec coupe partielle,

La Figure 2 représente la manille, la moitié gauche en coupe et la moitié droite en vue latérale.

Telle qu'elle est représentée au dessin, la manille 1 selon l'invention est constituée a partir d'une plaque qui comporte une fente longitudinale 2 dans sa partie médiane et qui a été cintrée en son milieu de façon à constituer les deux branches 1a et 1b du corps de la manille, le fente 2 étant orientée dans la direction longitudinale de ce corps. Cette fente 2 a une largeur légèrement supérieure à l'épaisseur des maillons d'une chaîne 3 et permet ainsi le passage du maillon d'extrémité 3a de cette chaîne 3 lorsque le maillon est disposé transversalement, c'est-à-dire perpendiculairement aux branches 1a et 1b. Un demi-maillon de retenue 4, de même diamètre que le maillon de la chaîne 3, ou d'un diamètre légèrement supérieur, peut être engagé entre les deux branches 1a et 1b de la manille et enfilé dans le maillon 3a; ce dernier maillon 4 peut être immobilisé par rapport à la manille par une goupille 5 traversant un trou 6 d'un bossage 7 solidaire du demi-maillon et des trous 8 ménagés dans les branches 1a et 1b.

Pour fixer la manille 1 à la chaîne 3, il suffit d'engager le maillon 3a dans la fente 2, de faire passer le demi-maillon 4 dans ce maillon 3a et d'immobiliser ce demi-maillon par rapport à la manille à l'aide de la goupille 5.

Dans l'exemple représenté, chacune des branches 1a et 1b de la manille est percée d'un trou lisse 9a ou 9b pour le pasage du manillon 10. Une rondelle 11, en forme de poire, est munie dans sa partie large d'un trou taraudé 12 dans lequel le manillon peut être vissé, et comporte, dans la partie étroite, un téton 13 faisant saillie par rapport à la face interne de celle-ci; ce téton est engagé avec un jeu relativement important dans un trou 14 de la branche latérale 1b de la manille. Un étrier 15 est soudé sur la face externe de la branche 1b, au droit du trou 14; l'extrémité étroite de la rondelle 11 est engagée dans cet étrier, de sorte que ce dernier maintient la rondelle et l'empêche de se séparer de la rondelle.

Lorsque le maillon 10 est engagé dans les trous 9a et 9b et vissé dans le trou taraudé 12 de la rondelle 11, celle-ci se déplace de façon que le manillon vienne reposer sur la paroi du trou 9b.

Il va de soi que la présente invention ne doit pas être considérée comme limitée au mode de réalisation décrit et représenté, mais en couvre, au contraire, toutes les variantes.

**Revendications**

1. Manille pour chaîne caractérisée en ce qu'elle présente, à son extrémité opposée, au manillon (10), une fente longitudinale médiane (2) dans laquelle on peut engager transversalement le maillon d'extrémité (3a) de la chaîne (3), et en ce qu'elle comporte une portion de maillon auxiliaire (4) pouvant être engagée entre les deux branches (1a et 1b) de la manille, dans ce maillon d'extrémité (3a).

2. Manille pour chaîne, caractérisée en ce que la portion de maillon (4) est un demi-maillon.

3. Manille selon la revendication 1 ou 2, caractérisée par des moyens pour fixer la portion de maillon (4) à la manille (1).

4. Manille selon la revendication 3, caractérisée en ce que ces moyens sont constitués par un axe (5) traversant la portion de maillon (4) et les deux branches (1a et 1b) de la manille.

5. Manille selon l'une quelconque des revendications précédentes, caractérisé en ce que le corps de la manille est constitué par une plaque munie dans sa partie centrale d'une fente longitudinale (2) et repliée sur eile-même.

## Patentansprüche

1. Kettenschäkel, dadurch gekennzeichnet, daß er an seinem einem Schäkelbolzen gegenüberliegenden Ende mittig einen Schlitz (2) aufweist, durch den das Endglied (3a) einer Kette (3) quer hindurchgreifen kann, und daß er ein Segment (4) eines Kettengliedes als Hilfselement aufweist, das zwischen zwei Schenkeln (1a, 1b) des Schäkels (1) in das Endglied (3a) der Kette in Eingriff gebracht werden kann.

2. Kettenschäkel nach Anspruch 1, dadurch gekennzeichnet, daß das Kettengliedsegment (4) ein halbes Kettenglied ist.

3. Kettenschäkel nach einem der Ansprüche 1 oder 2, gekennzeichnet durch Mittel zum Fixieren des Kettengleidsegmentes im Kettenschäkel.

4. Kettenschäkel nach Anspruch 3, dadurch gekennzeichnet, daß als Mittel zum Fixieren des Kettengliedsegmentes ein Achsbolzen (5) dient, der quer durch das Kettengliedsegment (4) und die beiden Schenkel (1a, 1b) des Schäkels (1) hindurchgreift.

5. Kettenschäkel nach einem der vorhergehenden Ansprüche, dadurch gekennzeichnet, daß der Schäkel (1) im wesentlichen aus einem Blech besteht, das einen zentralen Schlitz (2) aufweist und U-förmig gebogen ist.

## Claims

1. Chain shackle characterised in that it has, at its end opposite to the shackle pin, a longitudinal central slot (2) in which it is possible to engage transversely the end link (3a) of the chain (3), and in this that it comprises a portion of an auxiliary link (4) which can be engaged, between the two limbs (1a) and (1b) of the shackle, in the end link (3a).

2. Chain shackle, characterised in that the link portion (4) is a half link.

3. Shackle according to claim 1 or claim 2, characterised by means for securing the portion of the link to the shackle.

4. Shackle according to claim 3, characterised in this that these means are constituted by a pin (5) traversing the portion of the link (4) and the two limbs (1a and 1b) of the shackle.

5. Shackle according to any one of the preceding claims, characterised in this that the body of the shackle is constituted by a plate provided at its central part with a longitudinal slot (2) and is folded on itself.

# Fig.1

# Fig. 2

0011541